Europäisches Patentamt

European Patent Office

Office européen des brevets

(11) Publication number: **0 146 319**
**B1**

## (12) EUROPEAN PATENT SPECIFICATION

(45) Date of publication of patent specification: **27.04.88**

(51) Int. Cl.⁴: **B 60 J 5/04**

(21) Application number: **84308512.7**

(22) Date of filing: **06.12.84**

(54) Vehicle door structure.

(30) Priority: **19.12.83 JP 195292/83**
**26.12.83 JP 203538/83**
**27.02.84 JP 27643/84**

(43) Date of publication of application:
**26.06.85 Bulletin 85/26**

(45) Publication of the grant of the patent:
**27.04.88 Bulletin 88/17**

(84) Designated Contracting States:
**DE FR GB**

(56) References cited:
**EP-A-0 040 588**
**DE-A-2 808 235**

(73) Proprietor: **TOYOTA JIDOSHA KABUSHIKI KAISHA**
**1, Toyota-cho Toyota-shi**
**Aichi-ken 471 (JP)**

(72) Inventor: **Yao, Hiroyuki**
**3-17, Inabaji-cho Nakamura-ku**
**Nagoya-shi Aichi-ken (JP)**
Inventor: **Okamoto, Yuji**
**Higashi Aprt. Room 312 10, Toyota-cho**
**Toyota-shi Aichi-ken (JP)**

(74) Representative: **Ben-Nathan, Laurence Albert**
**Urquhart-Dykes & Lord 91 Wimpole Street**
**London W1M 8AH (GB)**

Courier Press, Leamington Spa, England.

## Description

The present invention relates generally to a vehicle door structure, and more particularly to a vehicle door structure having an exterior surface portion of a door window located in a vehicle door, such that it is almost flush with an exterior surface portion of an enclosing door frame. Further, the present invention provides an apparatus which secures more reliably a door window to a resilient member, the resilient member being attached by an adhesive substance to the door window.

This invention reduces undesirable air resistance and noise which are generated by wind passing across the exterior surface portions of the window and door frame. Further, this door structure eliminates the narrow field of vision which is present in known devices. The vehicle door structure also improves the door assembly in that it provides for more reliable attachment between a resilient member and the door window.

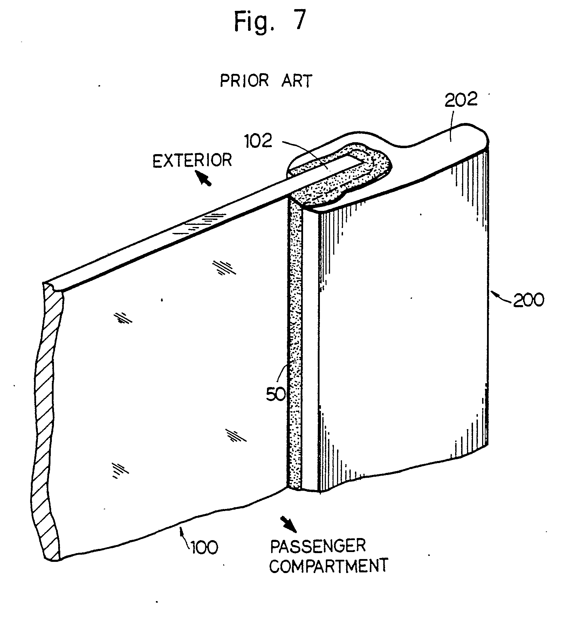

An example of a known door structure is disclosed in Japanese Laid-Open Utility Model JP—U—158322/81 (Japanese Utility Model Application No. Sho 55-58647), which is shown in Figure 7 of the present application. According to this known structure, a rear end portion 102 of a door window 100 is fixed to a slider 200 which guides the door window 100 during the vertical displacement thereof. An adhesive 50 is provided between the rear end portion 102 of the door window 100 and the slider 200 to fix the slider 200 to the door window 100. Figure 7 shows that an upper surface 202 of the slider 200 is horizontally sectioned. The adhesive 50 is not enclosed by any portion of the slider 200, which permits the adhesive 50 to spread onto the upper surface 202 of the slider 200. When the door window 100 is displaced downwardly by any means of operation, a passenger sitting nearest to the door visually observes the upper surface 202 of the slider 200. Thus, if the adhesive 50 spreads out onto the upper surface 202 of the slider 200, dust, dirt and moisture can accumulate upon the adhesive. Further, the spreading of the adhesive is undesirable from an aesthetic standpoint as well.

The present invention was made in view of the foregoing background and to overcome the foregoing drawbacks. It is accordingly an object of this invention to provide an improved vehicle door structure, wherein the adhesive employed for fixing a door window to the slider does not spread onto undesirable surfaces of the slider.

To attain the above objects, the invention provides a vehicle door structure, comprising a door frame mounted onto a vehicle such that it opens and closes for a passenger's ingress or egress, a door window having a plurality of corner portions, the door window ·being provided in the door frame such that an exterior surface of the door window is substantially flush with an exterior surface of the door frame, and a slider having a longitudinal groove therein to receive a side edge portion of the door window which is secured therein by an adhesive introduced into the groove, the slider acting to guide the door window along the door frame during an upward and downward displacement thereof, characterized in that the slider is formed at its upper end with a portion which closes the upper end of said groove therein and, together with opposite side walls of said groove, surrounds one of the plurality of corner portions of the door window, so that when the adhesive is introduced into said groove in the slider, the adhesive does not spread onto the upper end surface of the slider.

The above objects, features and advantages of the present invention will become more apparent from the following description of the preferred embodiments taken in conjunction with the accompanying drawings, wherein:

Fig. 1 is a perspective view of a vehicle body wherein a vehicle body structure according to the present invention is employed;

Fig. 2 is an enlarged cross-sectional view taken along the line II—II in Figure 1;

Fig. 3 is a partially enlarged cross-sectional view taken along the line III—III in Figure 2;

Fig. 4 is a cross-sectional view taken along the line IV—IV in Figure 3;

Fig. 5 is a cross-sectional view taken along the line V—V in Figure 3;

Fig. 6 is a partial perspective view which illustrates the rear portion of the vehicle door structure according to the present invention; and

Fig. 7 is a partial perspective view of a known vehicle door structure, illustrating its rear portion (as disclosed in JP—U—158322/81).

The present invention is described in detail with reference to the accompanying drawings which illustrate different embodiments of the present invention.

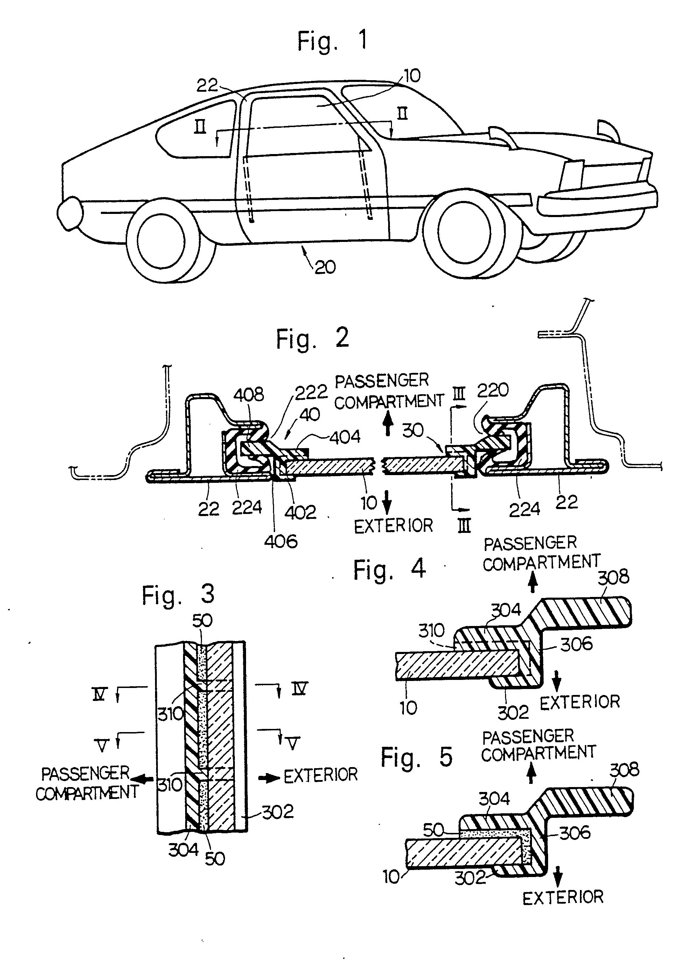

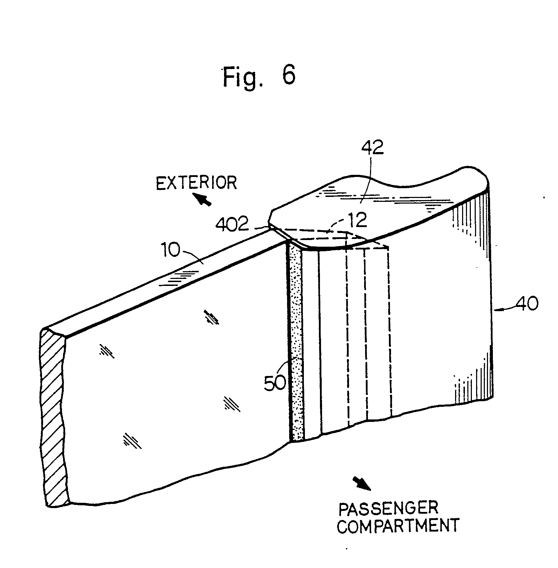

Figure 1 shows a perspective view of a vehicle body which utilizes a structure according to the present invention. A door window 10 is mounted such that it can be upwardly and downwardly displaced, by any known means of operation, within a door frame 22 of a door 20. Figure 2 shows an enlarged cross-sectional view taken along the line II—II in Figure 1. As shown in Figure 2, the door window 10 is mounted within the door frame 22. The door frame 22 has door window guide grooves 220 and 222 at front and rear portions of the frame 22. A cushioning member 224 is provided within the grooves 220 and 222. The sliders 30 and 40 are fixed to the door window 10 at the front and rear end portions thereof. Figures 4 and 5 show that the slider 30, which, for example, is made of synthetic resin, comprises an exterior portion 302, an interior portion 304, and a connecting portion 306 which connects the exterior portion 302 with the interior portion 304. The slider 30 also has an elongated front end portion 308. The exterior portion 302 of the front slider 30 extends in an almost parallel relationship with the exterior surface of the door window 10, and is almost flush with the exterior surface of the door frame 22. The interior portion 304 of the front slider 30 similarly extends in a parallel relationship with the interior surface of the door window 10. The connecting portion 306 of the slider 30 extends laterally across the door frame and connects the interior portion 304 with the exterior portion 302. The interior portion 304 of the slider 30 forwardly extends in the vehicle to form the elongated front end portion 308. The forward end of the elongated front end portion 308 is fitted into the cushioning member 224.

Similarly, a rear slider 40 can also be made of synthetic resin and comprises an exterior portion 402, an interior portion 404, a connecting portion 406, and an elongated rear end portion 408. The exterior portion 402 of the rear slider 40 extends in an almost parallel relationship with the exterior surface of the door window 10, and is almost flush with the exterior surface of the door frame 22. The interior portion 404 of the rear slider 40 extends in an almost parallel relationship with the interior surface of the door window 10. The connecting portion 406 of the rear slider 40 extends laterally across the door frame and connects the interior portion 404 with the exterior portion 402. The interior portion 404 of the slider 40 extends rearwardly to form the elongated rear end portion 408. The rearward end of the elongated portion 408 fits into the groove 222 and is surrounded by the cushioning member 224.

The portions 304 and 306 of the front slider 30 have ribs 310 which partially surround the front portion of the door window 10. As shown in Figure 3, a plurality of ribs 310 are separately provided at different vertical positions such that they properly locate the door window 10 within the slider 30. The front end of the door window 10 is fitted into the space defined between the portions 302, 304 and 306 of the slider 30. An adhesive 50, such as silicon adhesive or urethane adhesive, is fitted into the space between the door window 10 and the ribs 310, as shown in Figure 5. The adhesive 50 fixes the slider 30 to the front end of the door window 10. The slider 40 is similarly fixed to the rear end of the door window 10.

Figure 6 shows a partial perspective view which illustrates a portion of the vehicle door structure according to the present invention. A rearward upper corner portion 12 of the door window 10 is inclined as shown in Figure 6. The inclined corner portion 12 of the door window 10 is slidably fitted into a groove in the slider 40. The upper end surface 42 of the slider 40 is designed such that it has a flat upper surface which encloses the inclined corner portion 12 of the door window 10 underneath. The adhesive 50 which connects the slider 30 to the door window does not spread out onto the upper surface 42 of the slider 40. Hence, the undesirable features of the prior art have been obviated.

Similarly, a forward upper corner portion of a door window can be similarly surrounded by a slider such that both the forward and rearward upper corner portions of the door window prevent the adhesive 50 from spreading onto the upper end surface of the slider.

## Claims

1. A vehicle door structure, comprising a door frame (22) mounted onto a vehicle such that it opens and closes for a passenger's ingress or egress, a door window (10) having a plurality of corner portions (12), the door window (10) being provided in the door frame (22) such that an exterior surface of the door window (10) is substantially flush with an exterior surface of the door frame (22), and a slider (30, 40) having a longitudinal groove therein to receive a side edge portion of the door window (10) which is secured therein by an adhesive (50) introduced into the groove, the slider (30, 40) acting to guide the door window (10) along the door frame (22) during an upward and downward displacement thereof, characterized in that the slider (30, 40) is formed at its upper end with a portion which closes the upper end of said groove therein and, together with opposite side walls of said groove, surrounds one of the plurality of corner portions (12) of the door window (10), so that when the adhesive (50) is introduced into said groove in the slider (30, 40), the adhesive does not spread onto the upper end surface (42) of the slider (30, 40).

2. A vehicle door structure as claimed in claim 1, characterized in that the slider (30, 40) comprises a first portion (302, 402) which extends in an almost parallel relationship with an exterior surface of the door window (10), a second portion (304, 404) which extends in an almost parallel relationship with an interior surface of the door window (10), a third portion (306, 406) which connects the first portion (302, 402) of the slider (30, 40) with the second portion (304, 404) of the slider (30, 40), and a fourth portion (308, 408) connected with the third portion (306, 406), such that the fourth portion (308, 408) extends in a direction which is substantially opposite to the second portion (304, 404).

3. A vehicle door structure as claimed in claim 1, characterized in that the one of the plurality of corner portions is a rear upper corner portion (12).

4. A vehicle door structure as claimed in claim 1, characterized in that the one of the plurality of corner portions is a front upper corner portion.

5. A vehicle door structure as claimed in claim 1, characterized in that a first slider (40) is fixed to a rearward end of the door window (10) and a second slider (30) is fixed to a forward end of the door window (10).

6. A vehicle door structure as claimed in claim 1, characterized in that a rearward upper corner portion of the door window (10) is inclined with respect to the end portion of the slider (30, 40).

7. A vehicle door structure as claimed in claim 1, characterized in that a forward upper corner portion of the door window (10) is inclined with respect to the end portion of the slider (30).

8. A vehicle door structure as claimed in claim 5, characterized in that a rearward upper corner portion of the door window (10) is inclined with respect to the end portion of the first slider (40) and a forward upper corner portion of the door window (10) is inclined with respect to the end portion of the second slider (30).

9. A vehicle door structure as claimed in claim 2, characterized in that the vehicle door structure further comprises a cushioning member (224) provided within the door frame (22), the cushioning member (224) has an opening into which the fourth portion (308, 408) of the slider slidably engages.

10. A vehicle door structure as claimed in claim 9, characterized in that the second and third portions (304, 404; 306, 406) of the slider (30, 40) contain a plurality of horizontally located, vertically separated ribs (310).

## Patentansprüche

1. Eine Fahrzeugtürstruktur umfassend einen so in ein Fahrzeug eingebauten Türrahmen (22), dass er zum Ein- bzw. Aussteigen des Fahrgastes geöffnet oder geschlossen werden kann, ein Türfenster (10) mit einer Vielzahl von Eckteilen (12), wobei das Türfenster (10) so im Türrahmen (22) vorgesehen ist, dass eine äussere Oberfläche des Türfensters (10) mit einer äusseren Oberfläche des Türrahmens (22) im wesentlichen in einer Ebene liegt und eine Gleitvorrichtung (30, 40) mit einer darin befindlichen, länglichen Nut zur Aufnahme eines seitlichen Randteils des Türfensters (10), das dort durch eine in die Nut eingeführte Klebemasse (50) gesichert ist, wobei die Gleitvorrichtung (30, 40) bei einer Verschiebung des Türfensters (10) nach oben und unten zu dessen Führung entlang des Türrahmens (22) dient, dadurch gekennzeichnet, dass die Gleitvorrichtung (30, 40) an ihrem oberen Ende mit einem Teil ausgebildet ist, das das obere Ende dieser Nut dort abschliesst und, zusammen mit gegenüberliegenden Seitenwänden dieser Nut, eines der Vielzahl der Eckteile (12) des Türfensters (10) so umgibt, dass wenn die Klebemasse (50) in diese Nut in der Gleitvorrichtung (30, 40) eingeführt wird, die Klebemasse nicht auf die obere Endfläche (42) der Gleitvorrichtung (30, 40) ausläuft.

2. Eine Fahrzeugtürstruktur nach Anspruch 1, dadurch gekennzeichnet, dass die Gleitvorrichtung (30, 40) ein erstes, sich fast parallel zu einer äusseren Oberfläche des Türfensters (10) erstreckendes Teil (302, 402) umfasst, sowie ein zweites, sich fast parallel zur einer inneren Oberfläche des Türfensters (10) erstreckendes Teil (304, 404), ein drittes, das erste Teil (302, 402) der Gleitvorrichtung (30, 40) mit dem zweiten Teil (304, 404) der Gleitvorrichtung (30, 40) verbindendes Teil (306, 406) und ein viertes, mit dem dritten Teil (306, 406) so verbundenes Teil (308, 408), dass das vierte Teil (308, 408) sich in einer zum zweiten Teil (304, 404) im wesentlichen gegensätzlichen Richtung erstreckt.

3. Eine Fahrzeugtürstruktur nach Anspruch 1, dadurch gekennzeichnet, dass eines der Vielzahl von Eckteilen ein oberes, hinteres Eckteil (12) ist.

4. Eine Fahrzeugtürstruktur nach Anspruch 1, dadurch gekennzeichnet, dass eines der Vielzahl von Eckteilen ein oberes, vorderes Eckteil ist.

5. Eine Fahrzeugtürstruktur nach Anspruch 1, dadurch gekennzeichnet, dass eine erste Gleitvorrichtung (40) am hinteren Ende des Türfensters (10) und eine zweite Gleitvorrichtung (30) am vorderen Ende des Türfensters (10) befestigt ist.

6. Eine Fahrzeugtürstruktur nach Anspruch 1, dadurch gekennzeichnet, dass ein oberes, hinteres Eckteil des Türfensters (10) bezüglich des Endteils der Gleitvorrichtung (30, 40) geneigt ist.

7. Eine Fahrzeugtürstruktur nach Anspruch 1, dadurch gekennzeichnet, dass ein oberes, vorderes Eckteil des Türfensters (10) bezüglich des Endteils der Gleitvorrichtung (30) geneigt ist.

8. Eine Fahrzeugtürstruktur nach Anspruch 5, dadurch gekennzeichnet, dass ein oberes, hinteres Eckteil des Türfensters (10) bezüglich des Endteils der ersten Gleitvorrichtung (40) und ein oberes, vorderes Eckteil des Türfensters (10) bezüglich des Endteils der zweiten Gleitvorrichtung (30) geneigt ist.

9. Eine Fahrzeugtürstruktur nach Anspruch 2, dadurch gekennzeichnet, dass die Fahrzeugtürstruktur des weiteren ein im Türrahmen (22) vorgesehenes Polsterelement (224) umfasst, das eine Öffnung aufweist, in die das vierte Teil (308, 408) der Gleitvorrichtung gleitend eingreift.

10. Eine Fahrzeugtürstruktur nach Anspruch 9, dadurch gekennzeichnet, dass die zweiten und dritten Teile (304, 404; 306, 406) der Gleitvorrichtung (30, 40) eine Vielzahl von waagerecht angeordneten, senkrecht beabstandeten Rippen (310) beinhalten.

## Revendications

1. Une structure de porte de véhicule, comprenant un cadre de porte (22) monté sur un véhicule tel qu'il s'ouvre et se ferme pour l'entrée et la sortie des passagers, une vitre de porte (10) présentant plusieurs parties en coin (12), la vitre de porte (10) étant prévue dans le cadre de porte (22) de façon que la surface extérieure de la vitre de porte (10) affleure sensiblement à la surface extérieure du cadre de porte (22), et un coulisseau (30, 40) présentant intérieurement une rainure longitudinale pour recevoir une partie de bord latéral de la vitre de porte (10) qui y est fixé par une matière adhésive (50) introduite dans la rainure, le coulisseau (30), 40) agissant pour guider la vitre de porte (10) le long du cadre de porte (22) pendant son déplacement vers le haut et vers le bas, caractérisée en ce que le coulisseau (30, 40) présente, à sa partie supérieure, une partie qui renferme l'extrémité supérieure de ladite rainure et qui en coopération avec les parois opposées latérales de ladite rainure entoure l'une de la pluralité de parties en coin (12) de la vitre de porte (10) de sorte que, lorsque la matière adhésive (50) est introduite dans ladite rainure du coulisseau (30, 40), la matière adhésive ne s'étale par sur la surface extrême supérieure (42) du coulisseau (30, 40).

2. Une structure de porte de véhicule selon la revendication 1, caractérisée en ce que le coulisseau (30, 40) comprend une première partie (302, 402) qui s'étend pratiquement parallèlement à la surface extérieure de la vitre de porte (10), une seconde partie (304, 404) qui s'étend pratiquement parallèlement à la surface intérieure de la vitre de porte (10), une troisième partie (306, 406) qui relie la première partie (302, 402) du coulisseau (30, 40) avec la seconde partie (304, 404) du coulisseau (30, 40) et une quatrième partie (308, 408) reliée à la troisième partie (306, 406) de façon telle que cette quatrième partie (308, 408) s'étende dans une direction sensiblement opposée à la seconde partie (304, 404).

3. Une structure de porte de véhicule selon la revendication 1, caractérisée par le fait que l'une des parties en coin est une partie en coin supérieure arrière (12).

4. Une structure de porte de véhicule selon la revendication 1, caractérisée en ce que l'une des parties en coin est une partie en coin supérieure avant.

5. Une structure de porte de véhicule selon la revendication 1, caractérisée en ce qu'un premier coulisseau (40) est fixé sur l'extrémité arrière de la vitre de porte (10) et un second coulisseau (30) est fixé sur l'extrémité avant de la vitre de porte (10).

6. Une structure de porte de véhicule selon la revendication 1, caractérisée en ce que la partie en coin supérieure arrière de la vitre de porte (10) est inclinée par rapport à la partie extrême du coulisseau (30, 40).

7. Une structure de porte de véhicule selon la revendication 1, caractérisée en ce que la partie en coin supérieure avant de la vitre de porte (10) est inclinée par rapport à la partie extrême du coulisseau (30).

8. Une structure de porte de véhicule selon la revendication 5, caractérisée en ce que la partie en coin supérieure arrière de la vitre de porte (10) est inclinée par rapport à la partie extrême du premier coulisseau (40) et une partie en coin supérieure avant de la vitre de porte (10) est inclinée par rapport à la partie extrême du second coulisseau (30).

9. Une structure de porte de véhicule selon la revendication 2, caractérisée en ce que la structure de porte de véhicule comprend de plus un élement (224) formant coussin prévu dans le cadre de porte (22), l'élément formant coussin (224) présentant une ouverture dans laquelle s'éngage, de façon coulissante, la quatrième partie (308, 408) du coulisseau.

10. Une structure de porte de véhicule selon la revendication 9, caractérisée en ce que la seconde et la troisième parties (304, 404; 306, 406) du coulisseau (30, 40) contiennent une série de rainures (310) disposées horizontalement et séparées verticalement.

Fig. 1

Fig. 2

Fig. 3

Fig. 4

Fig. 5

0 146 319

Fig. 6

EXTERIOR

42

402

12

10

50

40

PASSENGER
COMPARTMENT

2

**0 146 319**

# Fig. 7

PRIOR ART

EXTERIOR

102

202

200

50

100

PASSENGER
COMPARTMENT

3